# EUROPÄISCHE PATENTSCHRIFT

(11) **EP 1 126 986 B1**
(45) Veröffentlichungstag und Bekanntmachung des Hinweises auf die Patenterteilung: **11.09.2002**
(21) Anmeldenummer: 98963321.9
(22) Anmeldetag: 05.11.1998
(51) Int. Cl.: B60D 5/00, B61D 17/20

(54) **VERBINDUNGSEINRICHTUNG ZWISCHEN ZWEI GELENKIG MITEINANDER VERBUNDENEN FAHRZEUGTEILEN EINES GELENKFAHRZEUGES**
CONNECTING DEVICE BETWEEN TWO VEHICLE PARTS OF AN ARTICULATED VEHICLE THAT ARE INTERCONNECTED IN AN ARTICULATED MANNER
DISPOSITIF DE LIAISON ENTRE DEUX PIECES ARTICULEES D'UN VEHICULE ARTICULE

(43) Veröffentlichungstag der Anmeldung: 29.08.2001
(73) Patentinhaber: HÜBNER Gummi- und Kunststoff GmbH, D-34123 Kassel (DE)
(72) Erfinder: GOEBELS, André, D-34134 Kassel (DE); HERZFELDT, Michael, D-34359 Reinhardshagen (DE)
(74) Vertreter: WALTHER, WALTHER & HINZ Patentanwälte
(86) Internationale Anmeldenummer: DE9803219
(87) Internationale Veröffentlichungsnummer: WO00027656

(56) Entgegenhaltungen:
- DE-A- 4 329 674
- DE-U- 9 215 394
- DE-U- 9 420 230
- US-A- 2 216 547
- US-A- 2 383 372

## Beschreibung

Die Erfindung betrifft eine Verbindungseinrichtung zwischen zwei gelenkig miteinander verbundenen Fahrzeugteilen eines Gelenkfahrzeugs, umfassend ein unteres Drehgelenk und einen Übergang mit einem Balg und einer Übergangsbrücke, wobei das Drehgelenk zwei durch ein Drehglied drehbar miteinander verbundene Gelenkglieder aufweist.

Gelenkfahrzeuge mit einer Verbindungseinrichtung der eingangs genannten Art sind beispielsweise bei schienengebundenen Fahrzeugen bekannt. In jüngerer Zeit läuft die Entwicklung auf sogenannte Niederflurfahrzeuge hinaus, das heißt Fahrzeuge, die insbesondere im Bereich des Einstieges nur einen geringen Abstand zur Oberfläche des Haltesteigs aufweisen. Solche Fahrzeuge sind nach unten abgesenkt. Nun ist es weiterhin so, dass aufgrund der Geräuschdämmung und auch aufgrund des Wärmeschutzes vermehrt doppelt ausgebildete Bälge zum Einsatz kommen. Das heißt, dass im Bereich des Überganges zwischen zwei gelenkig miteinander verbundenen Fahrzeugteilen eines Gelenkfahrzeuges im Bodenbereich nach unten hin relativ viel Raum benötigt wird, der allerdings aufgrund der geringen Fahrzeughöhe diesem Bereich häufig nicht zur Verfügung steht, gleichwohl im Bodenbereich der Balg nur als Einfach- und nicht als Doppelbalg ausgebildet ist.

Eine gattungsgemässe Verbindungseinrichtung ist aus DE-A-4 329 674 bekannt.

Der Erfindung liegt daher die Aufgabe zugrunde, eine Verbindungseinrichtung der eingangs genannten Art derart weiterzubilden, dass auch bei sogenannten Niederflurfahrzeugen eine genügende Bodenfreiheit auch im Bereich des Überganges vorhanden ist.

Die Aufgabe wird erfindungsgemäß dadurch gelöst, dass der Balg, der entweder als Wellen- oder Faltenbalg ausgebildet ist, an den Gelenkgliedern befestigt ist. Nach dem Stand der Technik war es bislang so, dass der Balg stirnseitig an den Fahrzeugteilen angelenkt wurde. Im Bereich der Stirnseiten am Fahrzeugportal sind gesonderte Aufhängungsvorrichtungen vorgesehen, die der Aufnahme des Balges dienen. Diese Aufhängevorrichtungen erstrecken sich unter anderem auch nach unten, das heißt in Richtung des Untergrundes, auf dem das Fahrzeug fährt und bringen daher den Nachteil mit sich, dass der Übergang und somit auch der das Gelenk überspannende Balg sich in relativer Nähe am Boden befinden, weshalb es bei geringfügigen Unebenheiten im Bereich des Untergrundes zu Beschädigungen des Balges kam. Durch die unmittelbare Anordnung des Balges an den Gelenkgliedern wird es nunmehr möglich, den Balg mit einem wesentlich geringeren Abstand zu dem Gelenk um das Gelenk herumzuführen. Die Folge hiervon ist, dass der Abstand des Balges zum Boden relativ gesehen größer ist als beim Stand der Technik.

Im Einzelnen ist vorgesehen, dass jedes Gelenkglied fahrzeugseitig eine Anschlagplatte zur Verbindung mit dem Fahrzeugteil aufweist, wobei der Balg an der Anschlagplatte angelenkt ist. Hierzu besitzt die Anschlagplatte vorteilhaft eine nutähnliche Aufnahme für das eine Ende des Balges, so dass keine gesonderten Befestigungsmittel zur Aufnahme des Balges im Bereich des Portales des Fahrzeugteiles vorgesehen sein müssen, was den Vorteil der preiswerteren Herstellung mit sich bringt. Zur Anbringung des Balges an der Anschlagplatte in der nutähnlichen Aufnahme ist vorgesehen, dass der Balg endseitig einen Wulst aufweist, der in der nutähnlichen Aufnahme einliegt. Um zu verhindern, dass der Balg mittig durchhängt, ist vorteilhaft nach einem weiteren Merkmal der Balg am Drehglied durch Verbindungsmittel angelenkt. Hierbei umfaßt das Verbindungsmittel bevorzugt zwei Arme, durch die der Balg jeweils erfaßt wird. Die Erstreckung der Arme ist hierbei vorteilhaft derart, dass das Drehglied im Wesentlichen vollständig überdeckt wird.

Nach einer besonderen Ausführungsform ist vorgesehen, dass die Übergangsbrücke, die durch den Balg, der beispielsweise als Falten- oder Wellenbalg ausgebildet sein kann, zwei Brückenelemente aufweist, wobei ein erstes der Brückenelemente an dem einen Gelenkglied im Bereich der Befestigung am Fahrzeugteil anbringbar ist, wobei das andere Brückenelement im Bereich der Drehachse des Drehgelenks durch ein Verbindungsglied mit dem einen ersten Brückenelement verbindbar ist. Hieraus wird deutlich, dass das eine Brückenelement fest mit dem einen Gelenkglied verbunden ist, wohingegen das andere Brückenelement quasi lose, das heißt horizontal beweglich auf dem Gelenkglied aufsitzt. Hierdurch wird erreicht, daß bei Kurvenfahrt das andere Gelenkglied sich relativ zu dem darüber befindlichen Brückenelement verschieben kann. Um zu verhindern, dass sich die Brückenelemente im Bereich des Verbindungsgliedes der beiden Brückenelemente durchbiegen, ist das Verbindungsglied auf dem Drehglied abstützbar gelagert.

Um weiterhin eine leichte Bewegung der Brückenelemente auf den Gelenkgliedern zu ermöglichen, ist vorgesehen, dass die Brückenelemente auf ihrer Unterseite Gleitglieder aufweisen. Um bei Kurvenfahrt des Gelenkfahrzeuges eine Bewegung des anderen Brückengliedes relativ zu dem benachbarten Fahrzeugteil zu ermöglichen, ist dieses Brückenglied zur Fahrzeugseite hin halbkreisförmig ausgebildet.

Nach einer besonderen Ausführungsform ist vorgesehen, dass die Verbindungseinrichtung im Dachbereich ein oberes Drehgelenk aufweist, wodurch erreicht wird, dass ein Einknicken der gelenkig miteinander verbundenen Fahrzeuge vermieden wird. Das heißt, dass derart verbundene Fahrzeugteile sich zwar horizontal relativ zueinander bewegen können, wie es bei Kurvenfahrt erforderlich ist, jedoch ist eine Nickbewegung um die horizontal verlaufende Querachse der Fahrzeuge durch eine derartige Konstruktion nicht möglich. Eine solche Konstruktion wird bei Fahrzeugen eingesetzt, die eine nur geringe Bodenfreiheit aufweisen und bei denen demzufolge das untere Drehgelenk nicht so dimensional ist, wie dies erforderlich wäre, wenn die Nickbewegung vermieden werden soll. Demzufolge ist im Dachbereich das weitere Drehgelenk vorgesehen.

Anhand der Zeichnungen wird die Erfindung nachstehend beispielhaft näher erläutert.
- Figur 1: zeigt die Verbindungseinrichtung in perspektivischer Darstellung;

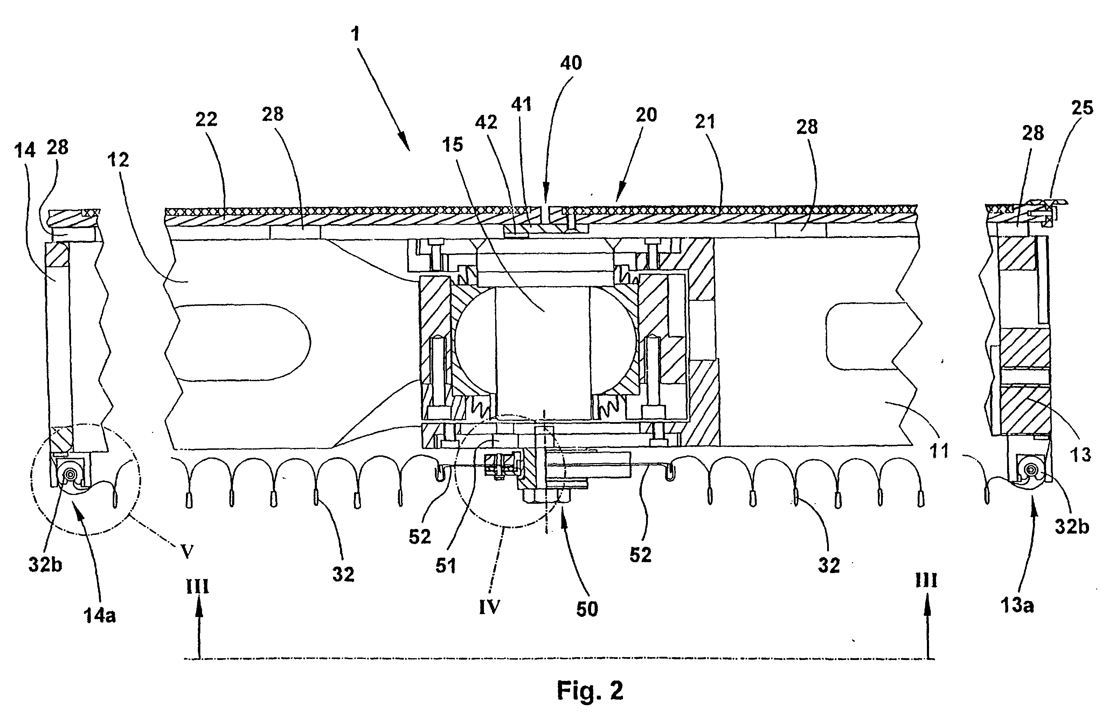

- Figur 2: zeigt einen Schnitt gemäß der Linie II/II aus Figur 1;

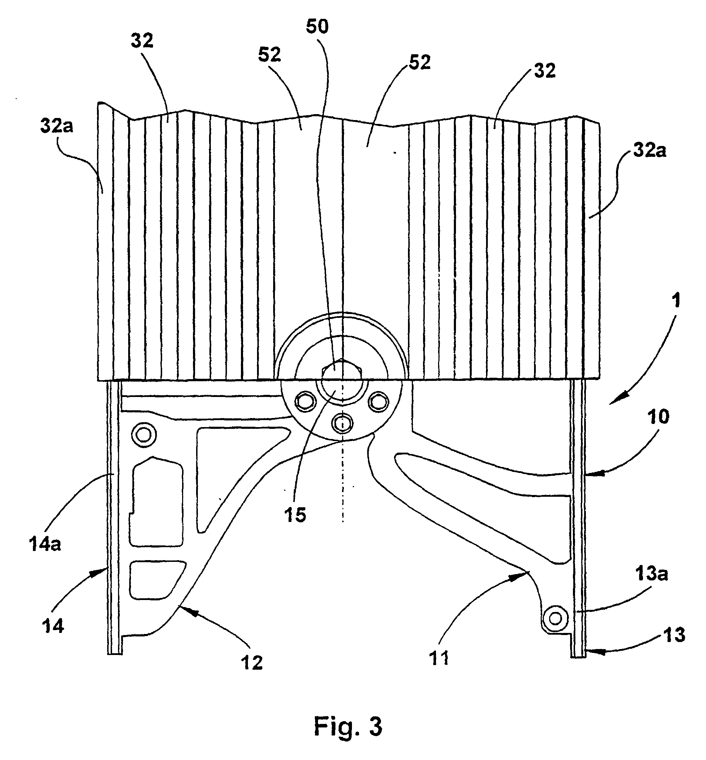

- Figur 3: zeigt eine Ansicht gemäß der Linie III/III aus Figur 2;

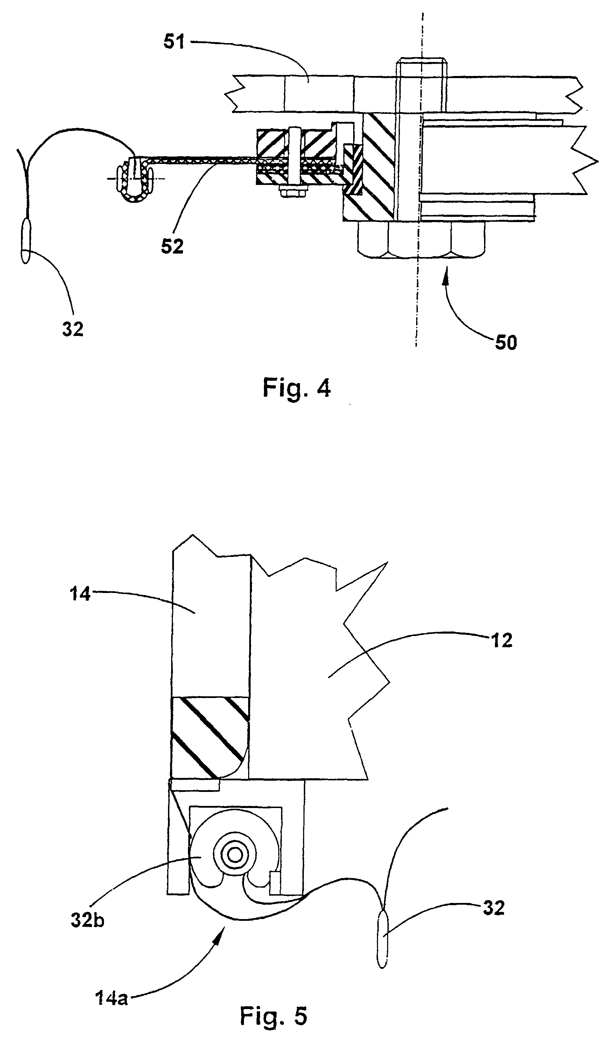

- Figuren 4 und 5: zeigen vergrößerte Darstellungen aus der Fig. 2.

Die insgesamt mit 1 bezeichnete Verbindungseinrichtung zeigt das mit 10 bezeichnete Drehgelenk, die mit 20 bezeichnete Übergangsbrücke sowie den Doppelwellenbalg 30. Der Doppelwellenbalg 30 besteht aus dem inneren Wellenbalg 31 und dem äußeren Wellenbalg 32. Jeder dieser Bälge 31, 32 besitzt endseitig einen Rahmen 31a bzw. 32a zur Befestigung an der Stirnseite des entsprechenden Fahrzeuges. Der äußere Wellenbalg 32 umgibt das Drehgelenk 10. Dieser Wellenbalg 32 ist an dem Drehgelenk 10 befestigt. Darüber hinaus ist ein oberes Drehgelenk 80 vorgesehen, das im Deckenbereich des Übergangs die beiden Wagen verbindet. Dieses Gelenk dient dazu, das Einknicken der Fahrzeuge zu verbinden, wie dies bereits beschrieben wurde.

Das Drehgelenk 10 besitzt die beiden Gelenkglieder 11, 12, die durch ein Drehglied 15 miteinander drehbar verbindbar sind. Jedes dieser Gelenkglieder 11,12 weist endseitig eine Anschlagplatte 13, 14 auf, die auf ihrer Unterseite mit einer Nut 13a, 14a versehen ist. Diese Nut 13a, 14a dient der Aufnahme des Balges 32. Hierzu zeigt der Balg endseitig eine wulstförmige Verdickung 32b zur Aufnahme in der Nut 13a, 14a.

Um ein Durchhängen des Balges 32 in der Mitte des Gelenks zu verhindern, ist vorgesehen, dass der Balg am Drehglied 15 durch Verbindungsmittel 50 gehalten ist. Das insgesamt mit 50 bezeichnete Verbindungsmittel umfaßt eine Achse 51, vermittels derer das Verbindungsmittel mit dem Drehglied 15 verbindbar ist. Die Achse 51 zeigt wiederum zwei plattenförmige Arme 52, die jeweils endseitig das jeweils freie Ende des Balges 32 aufnehmen.

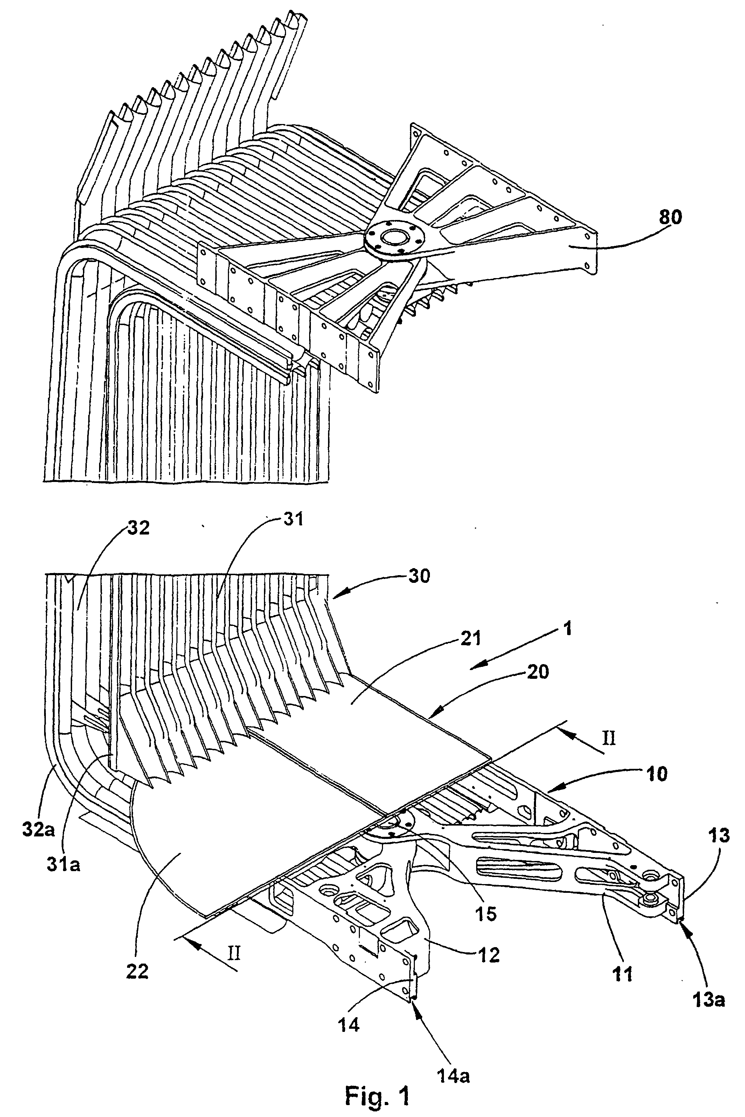

Die mit 20 bezeichnete Übergangsbrücke besteht aus den Brückenelementen 21 und 22. Hierbei ist das Brückenelement 21 bei 25 im Bereich der Anschlagplatte 13 mit dem Gelenkglied 11 des Drehgelenks 10 verbunden. Zur Verbindung dieses Brückenelementes 21 mit dem Brückenelement 22 ist ein insgesamt mit 40 bezeichnetes Verbindungsglied vorgesehen. Dieses Verbindungsglied 40 umfaßt eine Platte 41, die fest mit dem Brückenelement 21, aber drehbar mit dem Brückenelement 22 verbunden ist. Zugleich stützt sich diese Platte 41 durch ein Gleitglied 42 auf der Oberseite des Drehgliedes 15 ab. Das Brückenelement 22 ist halbkreisförmig ausgebildet, wie sich dies aus Figur 1 ergibt. Sowohl das Brückenelement 21 als auch das Brückenelement 22 zeigen auf ihrer Unterseite Gleitglieder 28, die eine Relativbewegung zwischen den einzelnen Brückengliedern und den Gelenkgliedern ermöglichen.

## Patentansprüche

1. Verbindungseinrichtung (1) zwischen zwei gelenkig miteinander verbundenen Fahrzeugteilen eines Gelenkfahrzeuges, umfassend ein unteres Drehgelenk (10) und einen Übergang mit einem Balg (30) und einer Übergangsbrücke (20), wobei das Drehgelenk (10) zwei durch ein Drehglied (15) drehbar miteinander verbundene Gelenkglieder (11, 12) aufweist,
**dadurch gekennzeichnet,**
**dass** der Balg (30) an den Gelenkgliedern (11, 12) befestigt ist.

2. Verbindungseinrichtung nach Anspruch 1,
**dadurch gekennzeichnet,**
**dass** jedes Gelenkglied (11, 12) fahrzeugseitig eine Anschlagplatte (13, 14) zur Verbindung mit dem Fahrzeugteil aufweist, wobei der Balg (30) an der Anschlagplatte (13, 14) angeordnet ist.

3. Verbindungseinrichtung nach Anspruch 2,
**dadurch gekennzeichnet,**
**dass** die Anschlagplatte (13, 14) eine nutähnliche Aufnahme (13a, 14a) für das eine Ende des Balges (30) aufweist.

4. Verbindungseinrichtung nach Anspruch 3,
**dadurch gekennzeichnet,**
**dass** der Balg (30) endseitig einen Wulst (32b) aufweist, der in der nutähnlichen Aufnahme (13a, 14a) einliegt.

5. Verbindungseinrichtung nach Anspruch 1,
**dadurch gekennzeichnet,**
**dass** der Balg (30) am Drehglied (15) durch Verbindungsmittel (50) angelenkt ist.

6. Verbindungseinrichtung nach Anspruch 5,
**dadurch gekennzeichnet,**
**dass** das Verbindungsmittel (50) zwei Arme (52) umfaßt, durch die der Balg (30) jeweils erfaßt wird.

7. Verbindungseinrichtung nach Anspruch 1,
**dadurch gekennzeichnet,**
**dass** der Balg (30) als Falten- oder Wellenbalg ausgebildet ist.

8. Verbindungseinrichtung nach Anspruch 1,
**dadurch gekennzeichnet,**
**dass** die Verbindungseinrichtung (1) im Dachbereich ein oberes Drehgelenk (80) aufweist.

9. Verbindungseinrichtung nach Anspruch 1,
**dadurch gekennzeichnet,**
**dass** die Übergangsbrücke (20) zwei Brückenelemente (21, 22) aufweist, wobei ein erstes Brückenelement (21) an dem einen Gelenkglied (11) im Bereich der Befestigung am Fahrzeugteil anbringbar ist, wobei das andere Brückelement (22) im Bereich der Drehachse des Drehgelenks (10) durch ein Verbindungsglied (40) mit dem einen ersten Brückenelement (21) verbindbar ist.

10. Verbindungseinrichtung nach Anspruch 9,
**dadurch gekennzeichnet,**
**dass** das Verbindungsglied (40) auf dem Drehgelenk (10) abstützbar gelagert ist.

11. Verbindungseinrichtung nach Anspruch 9,
**dadurch gekennzeichnet,**
**dass** die Brückenelemente (21, 22) auf ihrer Unterseite Gleitglieder (28) aufweisen.

12. Verbindungseinrichtung nach Anspruch 9,
**dadurch gekennzeichnet,**
**dass** das andere Brückenelement (22) halbkreisförmig ausgebildet ist.

13. Verbindungseinrichtung nach Anspruch 1,
**dadurch gekennzeichnet,**
**dass** der Balg (30) als Doppelwellenbalg (31, 32) ausgebildet ist.

## Claims

1. Connecting device (1) between two vehicle parts hinged to one another of an articulated vehicle, comprising a lower swivel joint (10) and a connection with a bellows (30) and an intercar gangway (20), whereas the swivel joint (10) is provided with two joint members (11, 12) being rotatably joined to one another by means of a rotary member (15),
**characterized in that** the bellows (30) is fastened on the joint members (11, 12).

2. Connecting device according to claim 1,
**characterized in that** each joint member (11, 12) is provided on its side facing the vehicle with an adapter plate (13, 14) for its connection with the vehicle part, whereas the bellows (30) is arranged on the adapter plate (13, 14).

3. Connecting device according to claim 2,
**characterized in that** the adapter plate (13, 14) is provided with a groove-like reception (13a, 14a) for the one end of the bellows (30).

4. Connecting device according to claim 3,
**characterized in that** the bellows (30) is fitted at its end with a swelling (32b) that is introduced into the groove-like reception (13a, 14a).

5. Connecting device according to claim 1,
**characterized in that** the bellows (30) is linked to the rotary member (15) by connecting means (50).

6. Connecting device according to claim 5,
**characterized in that** the connecting means (50) consists of two arms (52), by means of which the bellows (30) is positively locked.

7. Connecting device according to claim 1,
**characterized in that** the bellows (30) is designed as a pleated or as an undulated bellows.

8. Connecting device according to claim 1,
**characterized in that** the connecting device (1) in the roof area is provided with an upper swivel joint (80).

9. Connecting device according to claim 1,
**characterized in that** the intercar gangway (20) is provided with two gangway parts (21, 22), whereas a first gangway part (21) may be accommodated on the one joint member (11) in the area of the fastening on the vehicle part, whereas the other gangway part (22) may be connected to the first gangway part (21) in the area of the swivelling axis of the swivel joint (10) by means of a connecting member (40).

10. Connecting device according to claim 9,
**characterized in that** the connecting member (40) is borne on the rotary member (10) in such a manner so that it may be supported.

11. Connecting device according to claim 9,
**characterized in that** the gangway parts (21, 22) are provided on their underside with sliding members (28).

12. Connecting device according to claim 9,
**characterized in that** the other gangway part (22) has got a semicircular shape.

13. Connecting device according to claim 1,
**characterized in that** the bellows (30) is designed as a double undulated bellows (31, 32).

## Revendications

1. Dispositif de liaison (1) entre deux parties reliées de façon articulée d'un véhicule articulé comprenant une articulation pivotante inférieure (10) et un couloir de circulation avec un soufflet (30) et une passerelle d'intercirculation (20), l'articulation pivotante (10) étant pourvue de deux éléments d'articulation (11, 12) reliés en rotation par un pivot (15),
**caractérisé en ce que**
le soufflet (30) est fixé aux éléments d'articulation (11, 12).

2. Dispositif de liaison selon la revendication 1,
**caractérisé en ce que**
chaque élément d'articulation (11, 12) est pourvu, sur son côté faisant face au véhicule, d'une plaque de fixation (13, 14) lui permettant d'être relié à la partie de véhicule, le soufflet (30) étant disposé sur la plaque de fixation (13, 14).

3. Dispositif de liaison selon la revendication 2,
**caractérisé en ce que**
la plaque de fixation (13, 14) est munie d'un logement (13a, 14a) qui ressemble à une rainure et est destiné à recevoir l'une des extrémités du soufflet (30).

4. Dispositif de liaison selon la revendication 3,
**caractérisé en ce que**
le soufflet (30) est pourvu à son extrémité d'un bourrelet (32b) s'insérant dans ledit logement (13a, 14a) en forme de rainure.

5. Dispositif de liaison selon la revendication 1,
**caractérisé en ce que**
le soufflet (30) est articulé sur le pivot (15) à l'aide de moyens de liaison (50).

6. Dispositif de liaison selon la revendication 5,
**caractérisé en ce que**
le moyen de liaison (50) comprend deux bras (52) qui portent chacun le soufflet (30).

7. Dispositif de liaison selon la revendication 1,
**caractérisé en ce que**
le soufflet (30) est réalisé sous forme de soufflet ondulé ou à plis.

8. Dispositif de liaison selon la revendication 1,
**caractérisé en ce que**
le dispositif de liaison (1) est pourvu en toiture d'une articulation pivotante supérieure (80).

9. Dispositif de liaison selon la revendication 1,
**caractérisé en ce que**
la passerelle d'intercirculation (20) possède deux éléments de passerelle (21, 22), un premier élément de la passerelle (21) étant destiné à être monté sur l'un des éléments de l'articulation (11) à l'endroit de fixation à la partie de véhicule, et le deuxième élément de passerelle (22) étant destiné à être relié au premier élément de passerelle (21) dans la région de l'axe de rotation de l'articulation pivotante (TO) au moyen d'un élément de liaison (40).

10. Dispositif de liaison selon la revendication 9,
**caractérisé en ce que**
l'élément de liaison (40) s'appuie sur le pivot (10) qui le supporte.

11. Dispositif de liaison selon la revendication 9,
**caractérisé en ce que**
les éléments de passerelle (21, 22) sont pourvus, sur leur face inférieure, de membres coulissants (28).

12. Dispositif de liaison selon la revendication 9,
**caractérisé en ce que**
l'autre élément de passerelle (22) est réalisé sous forme de demi-cercle.

13. Dispositif de liaison selon la revendication 1,
**caractérisé en ce que** le soufflet (30) est réalisé sous forme de soufflet ondulé double (31, 32).
